# EUROPEAN PATENT SPECIFICATION

(11) **EP 4 589 699 B1**
(45) Date of publication and mention of the grant of the patent: **25.11.2026**
(21) Application number: 24382043.8
(22) Date of filing: 17.01.2024
(51) Int. Cl.: H01M 8/0444, H01M 8/04746, H01M 8/2475, H01M 8/249

(54) **INERTING SYSTEM FOR A FUEL CELL SYSTEM IN AN AIRCRAFT**
INERTISIERUNGSSYSTEM FÜR EIN BRENNSTOFFZELLENSYSTEM IN EINEM FLUGZEUG
SYSTÈME D'INERTISATION POUR UN SYSTÈME DE PILES À COMBUSTIBLE POUR UN AÉRONEF

(43) Date of publication of application: 23.07.2025
(73) Proprietor: Airbus Operations, S.L.U., 28906 Getafe, Madrid (ES)
(72) Inventor: MARCOS IZQUIERDO, Juan Luis, 28906 Getafe, Madrid (ES)
(74) Representative: ABG Intellectual Property Law, S.L.

(56) References cited:
- EP-B1- 2 775 560
- EP-B1- 3 161 890
- JP-A- H04 342 962
- NO-A1- 20 220 699

## Description

### TECHNICAL FIELD OF THE INVENTION

The present invention relates to an inerting system for an aircraft and a method of inerting fuel cell systems. More particularly, the invention relates to an improved inerting system that injects inert gas around fuel cells in a distributed manner to ensure a correct dissolution of flammable agents that could appear around the fuel cells.

### BACKGROUND OF THE INVENTION

It is well-known to those skilled in the art to inert explosive or flammable atmospheres on-board an aircraft with inert gas (such as nitrogen), such as for example fuel tanks or fuel cells, by providing inert gas to the inside of the casings housing the hydrogen-based systems. Hydrogen is a gas with a very high permeability. This makes it challenging to contain hydrogen gas inside an enclosure. The inerting is performed in order to avoid risks of explosion or flames in casings housing fuel cells. It is common to use nitrogen as inerting gas, the inert gas being provided by nitrogen bottles or nitrogen generation systems. The nitrogen circulates in the fuel cells casing at a nominal rate, determined based on a worst case scenario (i.e. with the maximum nominal case scenario leakages). This sizing is made to ensure that the limits of a flammable mixture of hydrogen and oxygen in volumetric concentration are never reached in this atmosphere. The mix of the atmosphere or fluid inside the fuel tank or fuel cell casing is then expelled to the outside of the aircraft. The concentration of hydrogen and oxygen in this atmosphere is maintained many times below the required safety policy limits.

The injection of inert gas is currently performed as a generic injection of inert gas in the enclosure of the fuel cells. This enclosure could be defined as a "container" or "casing". The term "injector" is used to define the inlet of inert gas (such as nitrogen) in the volume to be inerted. This injection is usually made taking into account a generic position and the capacity to supply the different flows needed. The quantity of inert gas injected is calculated to be able to dissolve a certain quantity of nominal leaks that can occur in such volume.

A common way to integrate fuel cells inside a casing is vertically placing such fuel cells side by side inside the casing according to a direction parallel to the longitudinal direction of an aircraft when the casing is on-board of the aircraft. In this case, the inert gas flow is injected from the inferior part of the casing, that is, bellow the fuel cells and an outlet is provided above the fuel cells. With this configuration, the risk of locally hydrogen accumulation surrounding the fuel cells is lower compared with other configuration of fuel cells inside the casing. However, such a solution cannot be adopted for fuel cells arranged horizontally, stacked one over the other in the casing.

EP 3161890 B1 describes an inerting system comprising an enclosure incorporating a plurality of FC units therein.

The present invention seeks to solve the problems mentioned above and others by improving the inerting of fuel cells casing with a distributed injection of inert gas.

### SUMMARY OF THE INVENTION

The present invention provides an inerting system according to claim 1, an aircraft according to claim 12 and a method for inerting a fuel cell system according to claim 13. In dependent claims, preferred embodiments of the invention are defined.

In a first inventive aspect, the present invention provides an inerting system adapted for inerting a fuel cell system for an aircraft, the fuel cell system comprising a set of fuel cells stacked next to each other along a longitudinal direction X-X' and with a free space between consecutive fuel cells; the inerting system comprising:
- a casing adapted to house the set of fuel cells so that there is also a free space between each fuel cell and the casing, the casing comprising bottom, a top and a plurality of lateral walls extending between the bottom and the top in the longitudinal direction X-X', the casing further comprising a first outlet configured to connect the inside of the casing with the outside of the aircraft;
- inert gas supplying means configured to supply inert gas;
- a fluid injection device in fluid communication with the inert gas supplying means through an inlet channel and configured to inject a fluid at least partially comprising inert gas into the casing; and
- fluid regulating means configured to regulate inert gas flow;
wherein
the first outlet of the casing is arranged over the stack of fuel cells according to the longitudinal direction X-X'; and
the fluid injection device comprises,
   a main channel connected to the inlet channel, and
   at least two distribution channels connected to the main channel and distributed at different heights along the longitudinal direction X-X'; and
each distribution channel comprises a plurality of injectors distributed longitudinally along the distribution channel and configured to inject fluid towards the free space between two fuel cells or the free space between a fuel cell and the casing.

The present inerting system is provided for inerting any enclosure that has a relatively small free volume and that needs to be inerted in an aircraft, and specifically for inerting fuel cell systems for aircraft wherein the fuel is hydrogen. For the present invention, the fuel cell system comprises a set of fuel cells stacked next to each other in a longitudinal direction X-X' with a free space between each two fuel cells, i.e. the fuel cells are arranged horizontally, stacked one over the other along the longitudinal direction X-X', with a free space between each two consecutive fuel cells.

The longitudinal direction X-X' is the stacking direction of the fuel cells inside the casing. When the present inerting system is on-board the aircraft, the longitudinal direction X-X' is substantially parallel to the vertical direction of the aircraft. This vertical direction of the aircraft is orthogonal to the horizontal plane containing the longitudinal direction of the aircraft. According to this longitudinal direction or stacking direction of the fuel cells, the casing comprises a bottom or lower surface, a top or upper surface and a plurality of lateral walls or lateral surfaces enclosing such lower and upper surfaces. For the present invention, relative terms such as "upper, lower, lateral, above, over etc." are referred with respect to the longitudinal direction X-X' or stacking direction of the fuel cells.

The inerting system comprises a casing that houses or encloses a fuel cell system or at least the set of fuel cells. Casing means an enclosure, which houses the fuel cell system or at least the set of fuel cells. This casing is used to contain a potential leak of hydrogen so that it does not extend outside the casing. The casing comprises a bottom, a top and a plurality of lateral walls, wherein each lateral wall extends from the bottom to the top in the longitudinal direction X-X'. That is, the bottom is connected to the top through the lateral walls.

The set of fuel cells is provided inside the casing keeping a free space between each fuel cell and any of the bottom, top and lateral walls of the casing. In this sense, inside the casing there are free spaces between fuel cells and between the fuel cells and the surfaces of the casing, i.e. free spaced between fuel cells and any of the following: bottom, top and lateral walls of the casing.

In an embodiment, the fuel cell system comprises a balance of plant arranged partially inside the casing and separated from the fuel cells. There is also a free space surrounding the balance of plant. The balance of plant is understood as the systems for regulating flows of hydrogen and air before being injected at their reaction sites in the fuel cells.

The casing comprises a first outlet configured to connect the inside of the casing with the outside of the aircraft. Specifically, this first outlet is understood as a vent line to purge the fluid inside the casing and this vent connects with the outside of the aircraft. In addition, this first outlet of the casing is arranged over the stack of fuel cells according to the longitudinal direction X-X', i.e. the first outlet is far away from the stack of fuel cells. In this sense, the first outlet is at a distance from the bottom of the casing that is greater than the distance between the bottom and the last fuel cells of the stack furthest from the bottom. In an embodiment, the stack of fuel cells is arranged inside the casing closer to the bottom of the casing. In an embodiment, the first outlet is at the top of the casing to take advantage of the fact that hydrogen is a lighter gas and will tend to go to the top of the casing naturally.

In the fluid housed inside the casing the oxygen concentration and the hydrogen concentration shall not be respectively higher than limits defined for safety reasons. In particular, oxygen shall not overpass 4% of volumetric concentration and hydrogen shall not overpass 4% of volumetric concentration.

Inside the casing, where the fuel cells are installed, are placed air supply pipes and hydrogen supply pipes. The joints between these pipes may also have nominal leakages and the inerting system is sized taking into consideration the worst case scenario of nominal leakages. The connectors of these hydrogen supply pipes and the fuel cells are the main sources of leakages.

For inerting the inside of the casing, the inerting system comprises supplying means for supplying inert gas to the present system and a fluid injection device for dispensing a fluid to the inside of the casing. In addition, the inerting system comprises an inlet channel through which a fluidic connection is maintained between the inert gas supplying means and the fluid injection device. The fluid dispensed inside the casing comprises mainly inert gas. In an embodiment, the inert gas is nitrogen. In an embodiment, the inert gas is pure nitrogen. In an embodiment, the inert gas is a combination of pure nitrogen with recirculated fluid from the casing. The meaning of "recirculated fluid" is defined below regarding a fluid recirculation system. Moreover, the fluid located inside the casing is understood as a gas fluid such as a pure gas or a gas mix.

Specifically, the fluid injection device comprises a main channel and at least two distribution channels. The main channel is connected to the inlet channel. The distribution channels are connected to the main channel and arranged in a distributed manner one above the other according to the longitudinal direction X-X'. The term "distributed" is not necessarily equal to evenly distributed. According to the invention, each distribution channel is located at a different height along the longitudinal direction X-X'.

Each distribution channel comprises a plurality of injectors longitudinally distributed along the distribution channel so that there are rows of injectors distributed at different heights along the longitudinal direction X-X'. These injectors are configured to inject fluid towards the free space between two fuel cells or the free space between a fuel cell and the casing.

The injectors are arranged in different rows so that the injectors of a distribution channel are arranged along one row. In an embodiment, a row of injectors is arranged in an area inside the casing comprised in any of the free space.

Furthermore, the inerting system comprises means for regulating fluid flowing through the inerting system, specifically for regulating fluid at least partially comprising inert gas.

The inerting system is therefore provided for inerting the volume around the fuel cells in a distributed manner to prevent the local accumulation of hydrogen and/or oxygen, which may otherwise create a flammable fluid in this volume.

Advantageously, the present inerting system is provided with a specific and improved fluid injection device to inject inert gas into the casing in a distributed manner so that the inert gas flows around the fuel cells in a way that ensures the correct dilution of possible flammable agent. The present fluid injection device is able to inject the inert gas towards the free spaces already mentioned above to have a good drag of the fluid surrounding the fuel cells. That is, the inert gas is not directly sent towards the outlet of the casing but provides a circulation of inerted fluid in the casing that allow to minimise nonventilated volumes in the casing, thereby minimising local accumulation of flammable gases. Turbulences may also be created inside the casing in order to increase the dilution of potentially local accumulation of flammable gases, giving as result a very homogeneous mixture in all the casing volume

Moreover, the present fluid injection device allows injecting inert gas inside the casing homogeneously enough to drag the fluid close to the interfaces where the leak of flammable fluid can be present. The inert gas flow that is injected has enough velocity around the surfaces where the leak can be present.

In an embodiment, the outlet of the injectors inside the casing is arranged separated from the lower surface of a fuel cell a distance preferably higher than 10 mm and lower than a half of the distance between the lower surface of a top fuel cell and the top surface of the lower fuel cell.

In an embodiment, the fluid injection device is located outside the casing so that the injectors of each distribution channel pass through the casing for injecting fluid inside the casing, each injector being an inlet to the inside of the casing. In this embodiment, the main channel and the distribution channels are located outside the casing whilst the injectors or at least part of the injectors is/are located inside the casing. In an embodiment, the injectors pass through the at least one of the lateral walls of the casing.

In an embodiment, the fluid injection device is located inside the casing so that the inlet channel passes through the casing. In this embodiment, the main channel and the distribution channel are located with the injectors inside the casing. In an embodiment, the inlet channel passes through any of the lateral walls of the casing.

In an embodiment, the fluid injection device is built into the casing.

In an embodiment, the main channel is partially arranged parallel to the longitudinal direction X-X'. In an embodiment, the distribution channels are arranged perpendicular to the longitudinal direction X-X'.

In an embodiment,
- the fluid injection device further comprises an additional distribution channel connected to the main channel and comprising a plurality of additional injectors arranged along the additional distribution channel, and
- the additional injectors are configured to inject fluid inside the casing according to the longitudinal direction X-X' from the bottom of the casing to the top of the casing.

Specifically, the additional injectors injects fluid from the bottom of the casing along a free space between the stack of fuel cells and one of the lateral walls of the casing according to the longitudinal direction X-X'.

Advantageously, the additional distribution channel evacuates fluid more quickly preventing inside the casing the accumulation of flammable gas which can leak out.

In an embodiment, the distribution channels are arranged on a same side of the stack of fuel cells. In this embodiment, the injectors are configured to inject fluid according to a same first direction from one lateral wall of the casing to an opposite lateral wall of the casing. In this sense, the fluid is injected only from one lateral wall of the casing, that is, from one side of the stack of fuel cells relative to the longitudinal direction X-X'. The term "side" will be understood as the space beside the stack of fuel cells for each of the faces of the stack, that is, the side of the stack of fuel cells is the area next to the stack. If the fluid injection device is located inside the casing, the distribution channels and their respective injectors are all positioned on the same side of the stack of fuel cells, i.e., between the stack of fuel cells and at least one of the lateral walls of the casing. On the other hand, if the fluid injection device is located outside the casing, the distribution channels are positioned beyond one of the casing lateral walls while the respective injectors are located between these distribution channels and said lateral wall of the casing. In any of these embodiments, the fluid is injected from a same side of the stack of fuel cells.

In an embodiment, at least
- a first distribution channel and the respective injectors are arranged on a first side of the of the stack of fuel cells so that the injectors are configured to inject fluid in a first direction through a first free space between two fuel cells or between a fuel cell and the casing, and
- a second distribution channel and the respective injectors are arranged on a second side, different from the first side of the stack of fuel cells, so that the injectors are configured to inject fluid in a second direction, different from the first direction, through a second free space consecutive to the first free space.

In other words, the distribution channels are arranged alternatively between two different sides of the stack of fuel cells so that for each free space fluid is injected from different sides of the stack of fuel cells. According to the longitudinal direction X-X', there is a first row of injectors for injecting fluid in a first direction for a first free space inside the casing. A second row of injectors for injecting fluid in a second direction for a second free space consecutive to the first free space, and so on, alternating injection from at least two sides of the stack of fuel cells. The first direction of injection being different from the second direction. In this embodiment, there are not two rows of injectors on the same side of the stack of fuel cells for the same free space to inject fluid into but alternate from each side of the stack for each free space.

In this embodiment, for each free space between fuel cells and between a fuel cell and the casing, there is a row of injectors located at any of the two sides of the stack of fuel cells, i.e., injecting fluid from any of two lateral walls of the casing. According to the longitudinal direction X-X', for a first free space, such as the free space between the casing bottom of the casing and a first fuel cell, a first row of injectors is located on a first side of the stack of fuel cells for injecting fluid from a first side of the stack in a first direction. For a second free space, consecutive to the first free space, such as a free space between the first fuel cell and a second fuel cell, a second row of injectors is located on a second side of the stack of fuel cells, for injecting fluid from the second side in a second direction different. The second side being different from the first side and the second direction being different from the first direction. For a third free space, consecutive to the second free space, such as a free space between the second fuel cell and a third fuel cell, a third row of injectors is located on the first side of the stack of fuel cells for injecting fluid from the first side according to the first direction. This would continue in a similar manner for each additional fuel cell in the stack,that is, alternating which side of the stack the fluid is injected from.

With the configuration of the above embodiment of alternating rows of injectors in height (according to the longitudinal direction X-X'), a wave or snake shaped fluid flow in the inside of the casing around the fuel cells is achieved. Thus ensuring that all or almost all of the fluid around the fuel cells is swept.

In an embodiment, the first side of the stacked fuel cells is opposite to the second side. In an embodiment, the first direction is opposite to the second direction. In an embodiment, the first lateral wall of the casing is opposite to the second lateral wall.

In an embodiment, the distribution channels and the respective injectors are arranged on two different sides of the stack of fuel cells and for each free space so that each free space can be injected with fluid from either side of the stack of fuel cells. For each free space between two fuel cells or between a fuel cell and the casing, the fluid injection device is configured to selectively actuate only the injectors located at one of the sides of the stack of fuel cells.

In this embodiment, although there are injectors on both sides of the stack of fuel cells the fluid injection device allows to inject fluid only from one side of the stack of fuel cells selectively. This means that the fluid injection device chooses whether to actuate the injectors on one side or the other side of the stack of fuel cells for each free space.

In an embodiment, each injector comprises an injecting channel and a nozzle. The nozzle is oriented and opened to the inside of the casing. The injecting channel is connected to the distribution channel and the nozzle.

In an embodiment, the nozzle comprises a nozzle opening for the injector fluid outlet, wherein a cross section area of the nozzle opening is larger than a cross section area of the injecting channel.

The above difference cross section are between the injecting channel and the nozzle opening allows the fluid diffusion to be homogeneous and with sufficient velocity to sweep the fluid inside the casing.

In an embodiment, each distribution channel and its respective injectors are comprised in an enclosing structure, the enclosing structure comprising a common outlet open to the casing and a common space upstream of the common outlet, and wherein the nozzle opening of each injector is open to said common space. Advantageously, this configuration allows it to be manufactured in one piece for easy assembly into the system.

In an embodiment, the inerting system comprises:
- sensing means configured to measure the concentration of oxygen and the concentration of hydrogen of the fluid located inside the casing; and
- control means in data communication with the sensing means and configured to independently control at least the fluid regulating means based on the concentration of oxygen and the concentration of hydrogen inside the casing.

The sensing means measures the concentration of oxygen and hydrogen of the fluid housed in the casing where the fuel cells are placed. These concentrations of oxygen and hydrogen refer to the volumetric concentration inside the casing and are expressed as a percentage.

The control means is connected to the sensing means so that according to the data provided by the sensing means, regarding the oxygen and hydrogen concentrations, the control means controls at least the fluid regulating means as needed. That is, if the oxygen and/or hydrogen concentration conditions are above a first pre-set threshold, part of the fluid of the casing is exhausted by extracting it from the casing and inert gas or pure inert gas is supplied by the inert gas supplying means. Therefore, the control means actuate at least the fluid regulation means at least when the concentration of oxygen and/or the concentration of hydrogen of the fluid of the casing are above said first pre-set thresholds. Specifically, the term "to actuate" is understood as to recirculate part of the fluid located inside the casing towards the inlet channel.

Depending on the hydrogen concentration and/or oxygen concentration, the fluid injection device injects more or less mass flow into the casing. If only the concentration of hydrogen or the concentration of oxygen inside the casing is above a corresponding first pre-set threshold more inert gas or pure inert gas is needed to be injected.

Thus, the inerting system is therefore provided for inerting the volume around fuel cells in a controlled manner to prevent the occurrence of a fire or the creation of a flammable fluid in an undesired area of said volume inside the casing.

These first thresholds are based on the safety policy.

By means of the sensing means and the control means, the inerting system advantageously allows to measure and monitor the concentration of both hydrogen and oxygen inside the casing at any time, both to be able to prevent a fire from occurring inside the casing.

In an embodiment, the inerting system comprises a fluid regulation system configured to recirculate part of the fluid located inside the casing to the inlet channel for supplying the recirculated fluid mixed with the inert gas to the inside of the casing through the fluid injection device; wherein the control means is further configured to:
- independently control the fluid recirculation system based on the concentration of oxygen and the concentration of hydrogen measured by the sensing means; and
- actuate the recirculation in the fluid recirculation system only when the concentration of oxygen and/or the concentration of hydrogen of the fluid located inside the casing are below second pre-set thresholds respectively.

This fluid recirculation system partially recirculates fluid located inside the casing through the inerting system. Part of the fluid located in the casing is recirculated to the inlet channel in order to be supplied back into the casing by the fluid injection device but mixed with inert gas or pure inert gas in such a way that the inside of the casing is kept inert.

In an embodiment, the control means are configured to independently control at least the fluid regulating means and the fluid recirculation system based on the concentration of oxygen and the concentration of hydrogen inside the casing. In such a way that the control means is configured to actuate the recirculation in the fluid recirculation system only when the concentration of oxygen and/or the concentration of hydrogen of the fluid located inside the casing are below second pre-set thresholds respectively.

Therefore, according to the data provided by the sensing means, regarding the oxygen and hydrogen concentrations, the control means controls the fluid regulating means and fluid recirculation system separately as needed. That is, if the oxygen and/or hydrogen concentration conditions are suitable, part of the fluid of the casing is recirculated by extracting it from the casing and re-injecting it mixed with pure inert gas or inert gas supplied by the inert gas supplying means. The oxygen and/or hydrogen concentrations are considered suitable for allowing the recirculation of part of the fluid housed in the casing when they are below a second pre-set threshold respectively. Therefore, the control means actuate the recirculation only when the concentration of oxygen and/or the concentration of hydrogen of the fluid of the casing are below such second pre-set thresholds.

Depending on the hydrogen concentration and/or oxygen concentration, the fluid recirculation system recirculates more or less mass flow of fluid from the casing. If the concentration of hydrogen and the concentration of oxygen of the fluid to be recirculated are below second pre-set thresholds, more mass flow of fluid from casing is recirculated and less pure inert gas or inert gas is needed. Whereas if only the concentration of hydrogen or the concentration of oxygen of the fluid to be recirculated is below the corresponding second pre-set threshold, less fluid from the casing is recirculated and more inert gas or pure inert gas is needed.

These second pre-set thresholds are based on the safety policy, so that if the concentration of oxygen and/or the concentration of hydrogen are sufficiently far away from the limits considered by the safety policy, the gas located inside the casing will be partially recirculated.

In the embodiment where the inerting system comprises a fluid recirculation system, advantageously the present inerting system requires less installation space in the aircraft as it reduces the amount of inert gas or pure inert gas needed for inerting by providing the possibility of partially recirculating the fluid located inside the casing. In addition, this reduction in the inert gas supplying means (bottles or generation system) in turn reduces the weight for the aircraft.

Moreover, the present inerting system allows to provide bigger mass flow entering the casing and lower mass flow coming from the inert gas supplying means thanks to the recirculation of fluid located inside the casing. This allows to limit the local build-up of oxygen and/or hydrogen by increasing the flow of inerted gas circulating in the casing. It may also allow to obtain a more turbulent flow, thereby also increasing the homogeneity of the mix of inert gas (nitrogen), oxygen and hydrogen. This homogenisation advantageously prevents punctual points of bigger concentrations that could lead to locally flammable mixture inside the casing.

Furthermore, as there is a higher mass flow entering the casing by the fluid injection device, the flow velocity through the casing is bigger and then the arrival time of an inerted fluid flowing through the casing containing risky concentrations of oxygen or hydrogen, will be detected much quicker, as it will arrive faster to the sensing means. Therefore, the present inerting system provides rapid detection of oxygen and hydrogen concentration values that may be indicative of risk to the inside of the casing. For example, if a mixture of oxygen and hydrogen with enough volumetric concentration of these gases in the fluid of the casing happens, there are higher risks of a fire to be triggered. For this reason, the present invention allows to take action before one of the first or second pre-set thresholds of concentrations of oxygen and concentrations of hydrogen is reached locally.

Additionally, the present inerting system advantageously has the capacity to regulate and variate, as needed, the mass flow coming from the inert gas supplying means depending on the information provided by the sensing means to the control means. The fluid regulating means control allows continuous sweeping of the fluid inside the casing.

In an embodiment, the fluid regulating means comprises:
- an inlet valve configured to regulate the supply of at least inert gas from the inert gas supplying means towards the fluid injection device; and
- a first outlet valve configured to regulate an outlet flow of fluid located inside the casing through the first outlet.

In another embodiment, the fluid regulating means comprise an inlet orifice with a predefined diameter that always allows the same flow rate to pass through.

The first outlet valve regulates the exhaust of fluid located inside the casing through the first outlet of the casing. This first outlet valve even in its closest position has a minimal aperture that lets pass a flow for exhausting the casing.

In an embodiment, the control means are also configured to control at least the regulation of the first outlet valve based on the measured concentration of oxygen and hydrogen.

In an embodiment, the control means are also configured to control the regulation of the inlet valve.

In an embodiment, the fluid recirculation system comprises:
- a recirculation channel connecting the inside of the casing with the inlet channel upstream the at least one inlet of the casing;
- a compressor interposed on the recirculation channel; and
- a recirculation valve located on the recirculation channel between the compressor and the connection of the recirculation channel with the inlet channel, the recirculation valve being configured to regulate the flow of recirculated fluid towards the inlet channel.

The recirculation channel of the fluid recirculation system connects the inside of the casing with the inlet channel in order to mix the recirculated fluid with inert gas or pure inert gas before being this mixture supplied to the casing through the fluid injection device. The recirculation channel of the recirculation system connects with the inlet channel in a section of this inlet channel between the inert gas supplying means and the inlet of the casing, that is, upstream the inlet of the casing.

The recirculation system further comprises a compressor interposed on the recirculation channel and being configured to compress the fluid coming from the inside of the casing to a pressure lower than the pressure at which the inert gas or pure inert gas is supplied to the inlet channel. This compressor ensures pumping of recirculated fluid through the fluid recirculation system. The supplying of the recirculated fluid to the inlet channel must be at a lower pressure than the inert gas or pure inert gas supply to prevent the recirculated fluid from flowing backwards in the inlet channel to the inert gas inlet.

Moreover, the fluid recirculation system comprises a recirculation valve for regulating the passage of fluid from the recirculation channel to the inlet channel. Specifically, this recirculated valve is connected to the recirculation channel between the compressor and the connection of the recirculation channel with the inlet channel.

The opening of the recirculation valve and/or the flow of fluid recirculated by the compressor depends on the measured hydrogen concentration and/or oxygen concentration.

More particularly, the inerting system further comprises a mixer interposed on the inlet channel, between the inert fluid regulating means and the at least one inlet of the casing. The mixer is connected to the recirculation channel and is configured to mix inert gas or pure inert gas from the inert gas supplying means and recirculated fluid from the fluid recirculation system.

The mixer is understood as an enclosure interposed on the inlet channel and in fluid communication with the inert gas supplying means, the fluid recirculation system and the inside of the casing by the fluid injection device. This mixer is where the recirculated fluid is mixed with the inert gas or pure inert gas before going to the inside of the casing. In an embodiment, the inlet valve regulates the passage of inert gas or pure inert gas toward the mixer and the recirculation valve regulates the passage of the recirculated fluid towards the mixer.

The present inerting system provides a flushing mode increasing the flow rate of inert gas or pure inert gas in order to diminish the concentrations of hydrogen and/or oxygen under pre-set flammability limits in a short time and extinguish a fire.

In an embodiment, the inerting system further comprises fire detection means in data communication with the control means and configured to detect fire inside the casing. The control means are further configured to open at maximum flow rate the inlet valve and the first outlet valve if the fire detection means detects a fire.

In another embodiment, the control means are further configured to open at maximum flow rate the inlet valve and first outlet valve if a high concentration of oxygen or hydrogen is detected by the sensing means, that is, if the concentration of oxygen or hydrogen is above fourth pre-set thresholds.

With the maximum flow rate opening of the first outlet valve flammable gases are advantageously exhausted from inside the casing. In addition, with the maximum flow rate opening of the inlet valve the flammable gases are swept out of the casing and the inside of the casing is quickly inerted again. Moreover, with the maximum flow rate opening of the first outlet valve the creation of an overpressure inside the casing is avoided.

Furthermore, with the provision of the present inerting system, replacing the use of any fire extinguishing agent (such as halon) is achieved. In addition, the installation space and weight of the fire extinguishing agent bottle is also spared since it has been replaced by the fluid recirculation system, which is anyway required for the inerting of the casing.

The fact of having a first outlet valve to enhance a bigger section of outflow in case of failure, gives an extra margin in terms of safety since the pressure releases quicker from the casing.

Moreover, the reaction time for extinguishing a fire and re-inerting the inside of the casing is shorter with the present inerting system compared to the prior art solutions or with a nominal flow, that is, without opening the inlet valve at its maximum flow rate. In addition, with the new fluid injection device it is possible to supply the fluid inside the casing in a more homogeneous and effective way by quickly sweeping the fluid surrounding the fuel cells inside of the casing.

More particularly, the fire detection means may comprise an overpressure sensor for detecting overpressure inside the casing. In case an overpressure inside the casing is detected, the inlet and outlet valves are adjusted to release the generated overpressure.

In an embodiment, the inerting system further comprises pressure measuring means in data communication with the control means and configured to measure the pressure inside the casing, wherein the control means is configured to open the outlet valve above a pre-set flow rate threshold if the pressure measured is over a pre-set pressure threshold. That is, if an overpressure is detected inside the casing, the inlet valve of the casing is regulated to release the generated overpressure and thus achieve a greater sweep of the fluid inside the casing. In addition, when an overpressure is detected inside the casing the inlet valve may be also opened above a pre-set flow rate threshold to continue inerting the inside of the casing to the maximum. In this case, the outflow of the outlet valve is greater than the inlet flow of the inlet valve to prevent pressure increase in the casing.

In an embodiment, the sensing means comprises at least a first sensor for measuring the concentration of oxygen and at least a second sensor for measuring the concentration of hydrogen. Advantageously, the sensing means allows measuring the concentration of hydrogen and the concentration of oxygen in order to determine the control means if the fluid contained in the casing can be recirculated.

In an embodiment, the sensing means is located in the casing and/or in the fluid recirculation system and/or in an exhaust channel connected to the first outlet of the casing. The provision of sensing means in the casing, in the fluid recirculation system and in the exhaust channel allows to measure the concentration of oxygen and hydrogen at different points in the inerting system where the fluid contained in the casing flows.

In an embodiment, the sensing means is located in the casing and/or in the recirculation channel of the fluid recirculation system upstream the compressor.

In an embodiment, there is a plurality of sensing means located in the casing with the aim to cover several areas in the casing, thus avoiding localised accumulation of oxygen and hydrogen.

In a second inventive aspect, the invention provides an aircraft comprising an inerting system according to the first inventive aspect.

In a third inventive aspect, the invention provides a method for inerting a fuel cell system by an inerting system that comprises a fluid injection device, wherein:
the fuel cell system is housed in a casing and comprises a set of fuel cells stacked next to each other along a longitudinal direction X-X' with free space between consecutive fuel cells and between each fuel cell and the casing; and
the fluid injection device comprises a main channel and a plurality of distribution channels connected to the main channel and distributed at different heights along the longitudinal direction X-X', each distribution channel comprising a plurality of injectors distributed along each distribution channel and configured to inject fluid towards the free space between two fuel cells or the free space between a fuel cell and the casing; wherein the method comprises:
(a) supplying inert gas to the fluid injection device by an inert gas supplying means; and
(b) exhausting part of a fluid located inside the casing through a first outlet;
wherein in step a) at least the inert gas supplied by the supplying means is injected inside the casing through the injectors, towards the free space between fuel cells and/or the free space between a fuel cell and the casing.

The present method is intended for inerting a fuel cell system, particularly, a casing enclosing a fuel cell system or a part of the fuel system, where the fuel is hydrogen, by injecting inert gas in a homogeneous way and sweeping the fluid surrounding the fuel cells as fast as possible. In an embodiment, the inerting system used for inerting the fuel cell system or part of the same is according to the first inventive aspect. The fuel cell system of an aircraft is enclosed in a casing, which is inerted in order to keep the fuel cell system inert.

In an embodiment, the method comprises:
(c) monitoring the concentration of oxygen and the concentration of hydrogen inside the casing by sensing means;
(d) recirculating part of the fluid located inside the casing through a fluid recirculation system of the inerting system if the concentration of hydrogen and/or the concentration of oxygen of the fluid to be recirculated are below second pre-set thresholds; and
(e) injecting to the inside of the casing the recirculated fluid mixed with inert gas through the fluid injection device.

In an embodiment, the inert gas is pure inert gas.

Advantageously, the method according to the above embodiment allows reuse of inert gas already supplied and mixed in the casing with other gases as long as the conditions of the fluid housed in the casing allow it, i.e. as long as the concentration of hydrogen and the concentration of oxygen remain below second pre-set thresholds.

In an embodiment, as long as the sensing means measures a concentration of hydrogen below a second hydrogen pre-set threshold and/or a concentration of oxygen below a second oxygen pre-set threshold, the fluid recirculation system recirculates fluid from the casing.

In an embodiment, the recirculation of step (d) is carried out if the concentration of hydrogen and the concentration of oxygen of the fluid (located inside the casing) to be recirculated are below second pre-set thresholds.

In another embodiment, the method further comprises a step of monitoring the pressure inside the casing by pressure measuring means in data communication with the control means, wherein if a pressure over a pre-set pressure threshold inside the casing is determined by the control means, the control means opens the first outlet valve for exhausting pressure from the casing until the pressure inside the casing is the same as outside the aircraft. The control means determines if there is an overpressure inside the casing based on the pressure measured by the pressure measuring means. More particularly, when a pressure over a pre-set pressure threshold inside the casing is determined, the control means also opens the inlet valve for supplying inert gas to the inside of the casing. Additionally, the first outlet valve and/or the inlet valve are/is opened above a pre-set flow rate threshold when an overpressure inside the casing is detected. According to normal working mode of the inerting system, the pressure inside the casing is slightly higher than outside in order to limit intake of oxygen from air surrounding the casing in case of limited leak of the casing.

In an embodiment, if the concentration of hydrogen inside the casing is above a third pre-set threshold and/or the concentration of oxygen inside the casing is above a third pre-set threshold, the control means opens, above a pre-set flow rate threshold, the first outlet valve for exhausting fluid from the casing and the inlet valve for supplying inert gas to the inside of the casing, until the concentration of hydrogen and the concentration of oxygen are below the third pre-set thresholds.

When the concentration of oxygen or concentration of hydrogen or both are above the third pre-set thresholds, the present system is reconfigured to exhaust the fluid housed inside the casing and re-inert the inside of the casing but without recirculation, that is, the recirculation system stops working.

In an embodiment, if the concentration of hydrogen and/or the concentration of oxygen inside the casing are above fourth pre-set thresholds, or if a fire inside the casing is detected, the control means opens at maximum flow rate the inlet valve and the first outlet valve.

In an embodiment, if the concentration of hydrogen and the concentration of oxygen are below the corresponding second pre-set threshold, the mass flow recirculated passing through a compressor of the fluid recirculation system is increased and the mass flow coming from the inert gas supplying means is lowered in the inlet conduct to diminish the concentration of oxygen and hydrogen inside the casing as needed.

In an embodiment, if the concentration of hydrogen or the concentration of oxygen is below the corresponding second pre-set threshold, the mass flow recirculated passing through a compressor of the fluid recirculation system is lowered and the mass flow coming from the inert gas supplying means is increased in the inlet conduct to diminish the concentration of oxygen or hydrogen inside the casing as needed.

In an embodiment, the second pre-set thresholds coincide with the third pre-set thresholds, so that there is a single pre-set threshold that sets whether the fluid located in the casing can be recirculated or not. That is, if the oxygen concentration and hydrogen concentration are below this pre-set threshold, recirculation is possible, but if the oxygen concentration and the hydrogen concentration are above the threshold, recirculation is not possible. In addition, if only the concentration of one of both, oxygen or hydrogen, is below the mentioned threshold, recirculation is possible, although less fluid is recirculated as indicated above.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic view of an inerting system according to an embodiment of the present invention.
- Figure 2: This figure shows a schematic view of an inerting system according to another embodiment of the present invention.
- Figure 3: This figure shows a schematic perspective view of a fluid injection device according to an embodiment of the present invention.
- Figure 4: This figure shows a schematic view of a fluid injection device according to an embodiment of the present invention.
- Figure 5: This figure shows a schematic view of a fluid injection device according to another embodiment of the present invention.
- Figure 6: This figure shows a schematic view of a fluid injection device according to another embodiment of the present invention.
- Figure 7: This figure shows a schematic view of a section of a fluid injection device according to an embodiment of the present invention.
- Figure 8: This figure shows a schematic view of a section of a fluid injection device according to another embodiment of the present invention.
- Figure 9: This figure shows a schematic view of an aircraft with an inerting system according to the present invention.

### DETAILED DESCRIPTION OF THE INVENTION

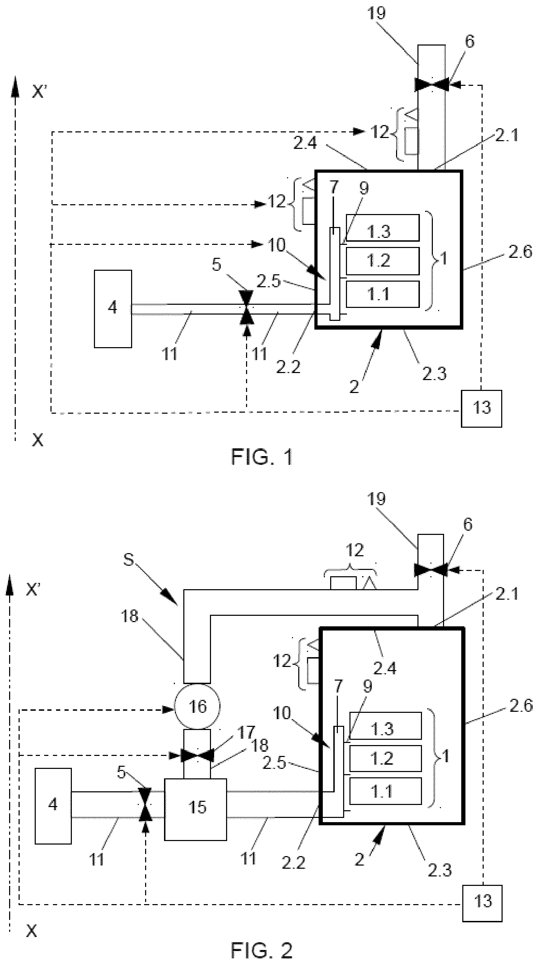

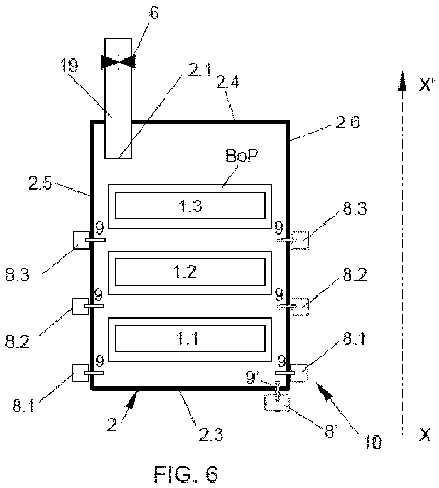

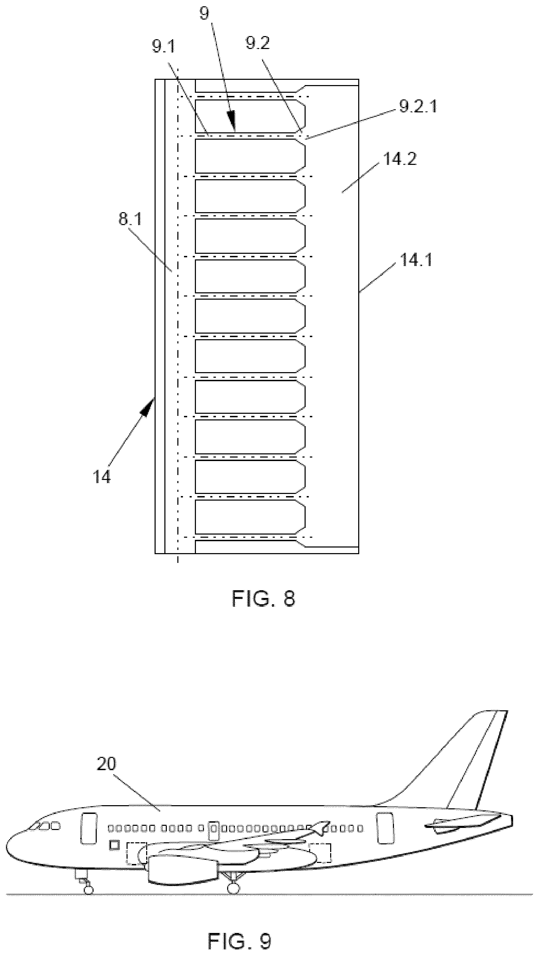

Figures 1 and 2 show an inerting system suitable for inerting a hydrogen fuel cell system houses in a casing (2) with a fluid injection device (10), the inerting system being provided with different configurations in each of the embodiments of figures 1 and 2. This inerting system is configured to be installed in an aircraft (20). Specifically, figure 9 shows an aircraft (20) suitable for comprising any of the inerting systems according to any of the embodiments shown in figures 1 and 6.

For any of the embodiments shown in figures 1 to 6, there is a casing (2) that houses inside a fuel cell system or a part of the same. This fuel cell system comprises three fuel cells (1) arranged horizontally one stacked on top of the other according to a longitudinal direction X-X'. The casing (2) comprises (according to longitudinal direction X-X') a bottom (2.3), a top (2.4) and at least a first lateral wall (2.5) and a second lateral wall (2.6), each lateral wall (2.5, 2.6) in contact with both the bottom (2.3) and the top (2.4). Inside the casing (2) there is a free space between each two fuel cells (1), i.e. between two consecutive fuel cells (1), and between the fuel cell (1) closest to the bottom (2.3) of the casing (2) and the bottom (2.3) of the casing (2).

The casing (2) comprises one inlet (2.2) and a first outlet (2.1) which allow a fluid flow through the casing (2). The inlet (2.2) is connected to an inlet channel (11) and the first outlet (2.1) is connected to an exhaust channel (19). The inlet channel (11) is in turn connected with inert gas supplying means (4) adapted for supplying nitrogen for inerting the inside of the casing (2). On the other hand, the first outlet (2.1) is configured to be connected to the outside of the aircraft (20). The flow inlet of fluid through the inlet (2.2) corresponds to the mass flow entering the casing (2) or mᵢₙ. The flow outlet of fluid through the first outlet (2.1) corresponds to the mass going outside the aircraft (20) and not coming back or mₒᵤₜ.

The inerting system shown in figures 1 and 2 further shows an inlet valve (5) of fluid regulating means interposed on the inlet channel (11) for regulating the flow of nitrogen that is supplied by the inert gas supplying means (4) to the inside of the casing (2) by the fluid injection device (10). That is, the nitrogen is supplied to the inside of the casing (2) through the inlet channel and its inlet flow to the fluid injection device (10) is regulated by the inlet valve (5). This flow inlet of nitrogen through to the inlet channel (11) corresponds to the mass flow coming from the inert gas supplying means (4) or mₐ.

The inerting system of these figures 1 and 2 also shows an outlet valve (6) interposed on the exhaust channel (19) for regulating the outlet flow of fluid coming from the inside of the casing (2) through the first outlet (2.1).

The fluid injection device (10) shown in these figures 1 and 2 is located inside the casing (2) and comprises a main channel (7) connected to the inlet channel (11) and three distribution channels (8) connected to the main channel (7). The main channel (7) is a connection pipe or a distribution pipe. In these figures, the inlet channel (11) passes through the casing (2) to be connected to the main channel (7) of the fluid injection device (10). The distribution channels (8.1, 8.2, 8.3) are horizontally arranged and perpendicular to the longitudinal direction X-X', and each one distributed on a different height along the longitudinal direction X-X'. Each distribution channel (8.1, 8.2, 8.3) comprises a plurality of injectors (9) configured to inject to the inside of the casing (2) fluid coming from the inlet channel (11). Specifically, the injectors (9) are arranged at a height inside the casing (2) according to the longitudinal direction X-X' that is coincident to an area comprised in a free space. More specifically, there is a first row of injectors (9) for injecting fluid towards the free space between a first fuel cell (1.1) and the bottom (2.3) of the casing (2). A second row of injectors (9) for injecting fluid towards the free space between the first fuel cell (1.1) and a second fuel cell (1.2). By last, there is a third row of injectors (9) for injecting fluid towards the free space between the second fuel cell (1.2) and a third fuel cell (1.3) of the stack of fuel cells (1).

The inerting system of figures 1 and 2 further shows sensing means (12) for measuring the concentration of oxygen and the concentration of hydrogen inside the casing (2). The sensing means (12) includes a first sensor (12.1) to measure the concentration of oxygen and a second sensor (12.2) to measure the concentration of hydrogen. According to figure 1, the first sensor (12.1) and the second sensor (12.2) are located on the casing (2) and on the exhaust channel (19). By contrast, in figure 2, the first sensor (12.1) and the second sensor (12.2) are located on the casing (2) and on a recirculation conduct (18).

Furthermore, the inerting system also comprises control means (13) that independently controls at least the inlet valve (5) and the outlet valve (6). The control means (13) are in data communication with the sensing means (12) in order to determine the concentration of oxygen and hydrogen inside the casing (2).

According to the embodiment of figure 2, the inerting system also comprises a fluid recirculation system (S) for recirculating part of the fluid housed in the casing (2). This recirculation consists of recirculating the fluid from inside the casing (2) to the inlet channel (11) and back into the casing (2) together with nitrogen supplied by the inert gas supplying means (4). The inerting system further shows a mixer (15) interposed on the inlet channel (11). Specifically this mixer (11) is arranged between the inlet valve (1.1) and the inlet (2.2) of the casing (2).

This fluid recirculation system (S) comprises a recirculation conduct (18) that connects the inside of the casing (2) with the mixer (11). The recirculation conduct (18) is arranged between the exhaust channel (19) and the mixer (11). The fluid recirculation system (S) also comprises a compressor (16) interposed on the recirculation conduct (18) and configured to pumping the fluid from the inside of the casing (2) and for regulate the pressure of the recirculated fluid in order to adjust the pressure of this recirculated fluid to be lower than that of the supplied nitrogen. The flow inlet of recirculated flow through the outlet recirculation conduct (18) corresponds to the mass flow recirculated passing through the compressor (16) or m_{c}.

The fluid recirculation system (S) further comprises a recirculation valve (17) arranged between the compressor (16) and the connection of the recirculation conduct (18) with the mixer (11). This regulation valve (17) is provided for regulating the inlet of recirculated fluid towards the recirculation conduct (18).

The control means (13) shown in figure 2 also controls independently controls the compressor (16) and the recirculation valve (17). Furthermore, the control means (13) are in data communication with the sensing means (12) in order to determine the concentration of oxygen and hydrogen inside the casing (2) and if it is possible to actuate the fluid recirculation system (S). That is, only if the control means (13) determines that the concentration of oxygen and/or the concentration of hydrogen are below second pre-set thresholds respectively, fluid can be recirculated. The fluid is recirculated from the inside of the casing (2) towards the inlet channel (11) to be supplied again to the inside of the casing (2) but mixed with nitrogen supplied by the inert gas supplying means (4).

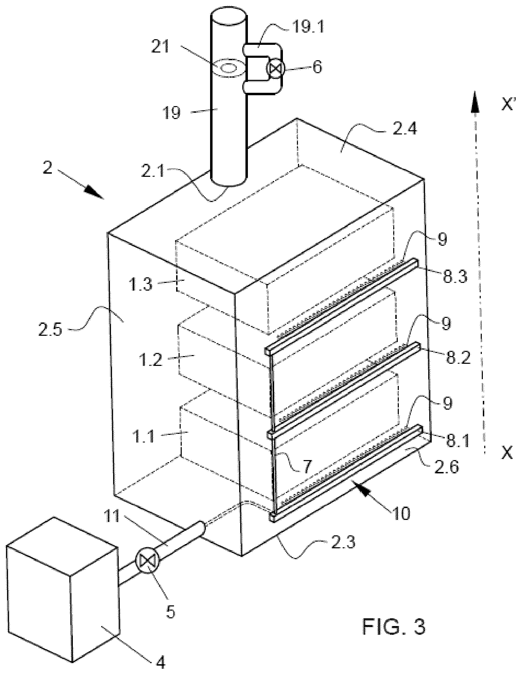

Figure 3 shows a fluid injection device (10) of an inerting system such as the one shown in figure 1, that is, with the fluid injection device (10) located inside the casing (2). In this embodiment, the fluid injection device (10) comprises a main channel (7) and three distribution channels (8.1, 8.2, 8.3) with their respective plurality of injectors (9). In the embodiment of this figure, the regulating means are means (21) of restraint of the exhaust channel (19) understood as a bypass in charge to regulate the exhaust of fluid from the casing (2). The exhaust channel (19) comprises a channel circuit (19.1) that starts in a point of the exhaust channel (19) between the means (21) of restraint and the first outlet (2.1) of the casing, and ends at a point of the exhaust channel (19) between the means (21) of restraint and the outside of the aircraft (20). In this case, the security valve (6) is located on the channel circuit (19.1) of the exhaust channel (19). Therefore, if the security valve (6) fails, it is ensured that the means (21) of restraint always remains active. In case there is a sudden release of hydrogen, air or even nitrogen inside the casing (2) and the security valve (6) does not work, the means (21) of restraint would always remain as a pressure release and would avoid a continuous pressure increase in the casing which could lead to other failures.

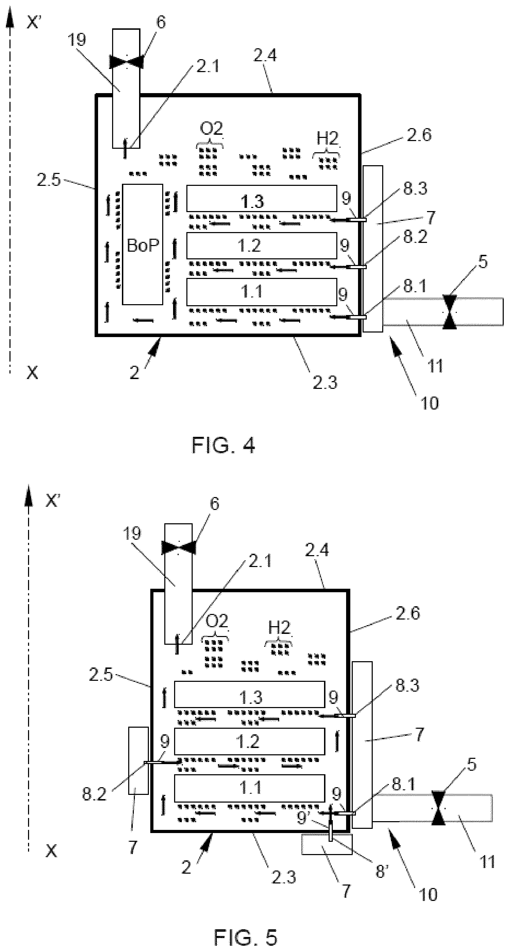

Figure 4 shows an embodiment of the inerting system wherein the fluid injection device (10) is located outside the casing (2) with the exception of the injectors (9) which in this case pass through a second lateral wall (2.6) of the casing (2). In this embodiment, the main channel (7) and the distribution channels (8.1, 8.2, 8.3) are located outside the casing (2). Specifically, there are three rows of injectors (9), each row corresponding to a distribution channel (8.1, 8.2, 8.3). According to the longitudinal direction X-X', there is a first row of injectors (9) for injecting fluid towards the free space between a first fuel cell (1.1) and the bottom (2.3) of the casing (2). A second row of injectors (9) for injecting fluid towards the free space between the first fuel cell (1.1) and a second fuel cell (1.2). A third row of injectors (9) for injecting fluid towards the free space between the second fuel cell (1.2) and a third fuel cell (1.3) of the stack of fuel cells (1). All these injectors (9) injects fluid in a same direction thus sweeping the fluid in the fuel cell's surroundings.

The embodiment of figure 4 further shows that the fuel cell system comprises a balance of plant (BoP) arranged inside the casing (2) and separated from the fuel cells (1). There is also a free space surrounding the balance of plant (BoP). The BoP is an assembly of valves, tubes and actuators, which has space between the different elements. The fluid injected by the injectors (9) causes a sweep in the fluid surrounding the balance of plant (BoP) to be achieved as well, in order the fluid flows inside the casing (2) towards the first outlet (2.1) as shown by the arrows. In practice, it has been observed that hydrogen accumulations can occur near the lower surface of the fuel cells (1). These accumulations can be counteracted by injecting fluid into the free space between the fuel cells (1) and the fuel cell (1) and the bottom (2.3) of the casing (2) pushing these accumulations towards the first outlet (2.1). In this figure 4, the oxygen and hydrogen particles have been represented as (O2) and (H2) respectively. The embodiment of this figure also shows that the exhaust channel (19) projects inside the casing (2) so that the first outlet (2.1) of the casing (2) is placed at the end of the exhaust channel (19) that is located inside the casing (2). This last referring to the oxygen and hydrogen particles and the provisions of part of the exhaust channel (19) inside the casing (2) is also shown for the embodiment of figure 5 explained below.

Figure 5 shows an embodiment of the inerting system wherein the fluid injection device (10) is also located outside the casing (2) with the exception of the injectors (9) which passes through a first lateral wall (2.5) and a second lateral wall (2.6) of the casing (2). In this embodiment, the main channel (7) and the distribution channels (8.1, 8.2, 8.3) are located outside the casing (2). There are three rows of injectors (9), each row corresponding to a distribution channel (8.1, 8.2, 8.3). According to the longitudinal direction X-X' of the fuel cells (1), there is a first row of injectors (9) arranged on a first side of the stack of fuel cells (1) for injecting fluid towards the free space between a first fuel cell (1.1) and the bottom (2.3) of the casing (2) according to a first direction. A second row of injectors (9) arranged on a second side of the stack of fuel cells (1), opposite to the first side, for injecting fluid towards the free space between the first fuel cell (1.1) and a second fuel cell (1.2) according to a second direction, opposite to the first direction. By last, there is a third row of injectors (9) arranged on the first side of the stack of fuel cells (1) for injecting fluid towards the free space between the second fuel cell (1.2) and a third fuel cell (1.3) of the stack of fuel cells (1) according to the same first direction. Each row of injectors (9) is located at a different height from the bottom (2.3) of the casing and alternating each row of injectors (9) between two opposite sides of the stack of fuel cells (1).

With the configuration of the fluid injection device (10) shown in figure 5, a wave or snake flow is achieved around the fuel cells (1) through the free spaces as shown by the arrows, which sweeps the fluid inside the casing (2) towards the first outlet (2.1).

Figure 5 also shows that the fluid injection device (10) comprises an additional distribution channel (8') connected to the main channel (7) and comprising a plurality of additional injectors (9'). The additional distribution channel (8') is arranged above the bottom (2.3) of the casing (2) according to the longitudinal direction X-X' and its respective injectors (9') passes through said bottom (2.3). In this case, the additional injectors (9') injects fluid in a direction from the bottom (2.3) to the top (2.4) of the casing (2) and through the free space provided between the stack of fuel cells (1) and the second lateral wall (2.6) of the casing (2).

Figure 6 shows an embodiment of the inerting system wherein the fluid injection device (10) is also located outside the casing (2) with the exception of the injectors (9) which passes through both the first lateral wall (2.5) and the second lateral wall (2.6) of the casing (2). In this embodiment, the main channel (7) (not shown) and the distribution channels (8.1, 8.2, 8.3) are located outside the casing (2). There are three set of rows of injectors (9), each row corresponding to a distribution channels (8.1, 8.2, 8.3) and for the same free space there is two rows of distribution channels (8.1, 8.2, 8.3) aligned with each other. According to the longitudinal direction X-X', there is a first row of injectors (9) arranged on a first side of the stack of fuel cells (1) and on a second side opposite to the first side. The injectors (9) located on the first side are able to inject fluid towards the free space between a first fuel cell (1.1) and the bottom (2.3) of the casing (2) according to a first direction. The injectors (9) located on the second side are able to inject fluid towards the free space between a first fuel cell (1.1) and the bottom of the casing (2) according to a second direction opposite to the first direction. This is also the same for the next two rows of injectors (9) for the free space between the first and second fuel cell (1.1, 1.2) and between the second and third fuel cell (1.2, 1.3).

For the embodiment of this figure 6, there is the possibility to inject fluid into a same free space from any of the first (2.5) and second (2.6) lateral walls of the casing (2) as needed. In this case, the control means (13) are also configured to actuate the fluid injection device (10) so that the fluid injection device (10) selectively activates regulating means of each distribution channel (8.1, 8.2, 8.3).

Figure 6 also shows, from a different point of view of figure 4, a balance of plants (BoP) behind the fuel cells (1).

For the embodiments of figures 3 to 6, the inlet of the casing (2) corresponds to the injectors (9).

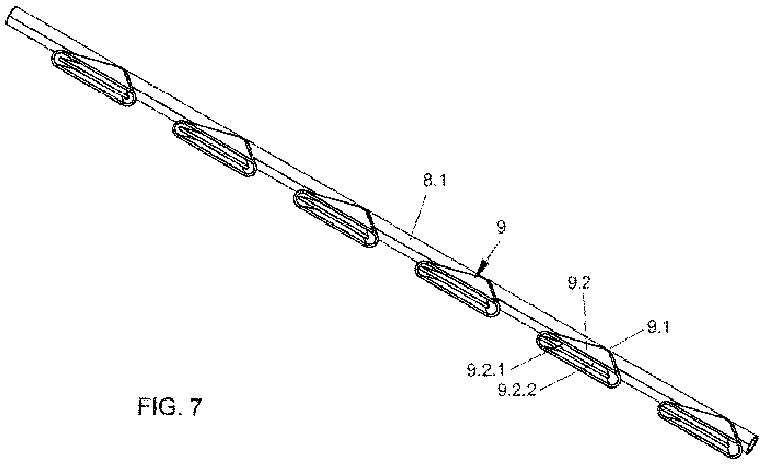

Figure 7 shows a distribution channel (8.1) with a plurality of injectors (9). Each injector (9) comprising an injecting channel (9.1) and a nozzle (9.2). The injecting channel (9.1) connects the distribution channel (8.1) with the nozzle (9.2), and the nozzle (9.2) comprises a nozzle opening (9.2.1) for the fluid outlet. Specifically, the cross section area of the nozzle opening (9.2.1) is larger than the cross section area of the injecting channel (9.1) of the injector (9). This configuration is the same for all the injectors (9). In addition, the nozzle (9.2) comprises an intermediate plate (9.2.2) contributing to the diffusion of the fluid.

Figure 8 shows an embodiment wherein the distribution channel (8.1) and its respective injectors (9) are comprised in an enclosing structure (14). This enclosing structure (14) comprises a common outlet (14.1) to be opened to the casing (2) and a common space (14.2) upstream of the common outlet (14.1). In addition, the nozzle opening (9.2.1) of each injector (9) is opened to this common space (14.2).

### Method for inerting a fuel cell system of an aircraft

The present invention further provides a method for inerting a fuel cell system of an aircraft (20) by an inerting system. An example of a method for inerting a fuel cell (1) casing (2) in an aircraft (20) is explained below, wherein the inerting is performed by any of the inerting systems described above regarding figures 1 and 6.

The method comprises a first step a) of supplying nitrogen to the fluid injection device (10) by means of inert gas supplying means (4). The control means (13) control the operation of the inlet valve (5) for regulating the flow of nitrogen that is supplied through the inlet channel (11) towards the fluid injection device (10), that is, for regulating mₐ. If it is the first time that an inert fluid is to be generated in the casing (2), the inlet valve (5) is opened to its maximum flow rate to allow inerting the casing (2) quickly, and in this case, mₐ is the same as mᵢₙ.

Specifically, in this step (a) the nitrogen supplied by the supplying means (4) is injected inside the casing (2) towards the free spaces between fuel cells (1) and the bottom (2.3) of the casing (2) and a fuel cell (1). This fluid injection is performed by the fluid injection device (10).

In the inerting process, there must not only be a fluid inlet inside the casing (2) but also a fluid outlet so that there is a continuous flow of fluid through the casing (2). For this reason, the method comprises the step (b) of exhausting part of a fluid housed inside the casing (2) through the first outlet (2.1) of the casing (2). The control means (13) control also the operation of the outlet valve (6) for regulating the outlet flow from the casing (2), that is, for regulating the mₒᵤₜ. The control means (13) controls the operation of both inlet valve (5) and outlet valve (6) so that there is always fluid flowing through the casing (2) so that a balance is maintained within the casing (2) being mₐ equal to mₒᵤₜ.

In an embodiment based on the inerting system shown in figure 2, and during the inerting, the method further monitors the concentration of oxygen and the concentration of hydrogen inside the casing (2) according to a step (c). This monitoring is performed by means of the sensing means (12) that are measuring continuously these concentrations.

Based on the data measured by the sensing means (12), the control means (13) determines if part of fluid housed in the casing (2) can be recirculated by a fluid recirculation system (S). That is, according to a step (d) of the method, if the control means (13) determines that the concentration of oxygen and/or the concentration of hydrogen of the fluid inside the casing (2) are/is below second pre-set thresholds, then the control means (13) controls the recirculation of part of the fluid located inside the casing (2). That is, the recirculation system (S) starts working.

While inerting is carried out, if the control means (13) determines that a fluid recirculation can be performed, the compressor (16) is operated to pump fluid from the inside of the casing (2) along the recirculation conduct (18), that is, to pump m_{c}. Then the recirculation valve (17) is controlled to regulate the passage of recirculated fluid to the mixer (15). During the fluid recirculation, the inlet valve (5) is controlled to reduce mₐ with the aim to compensate for some of the nitrogen that is not supplied by the recirculated fluid. In the case of recirculation, mₐ + m_{c} is equal to mᵢₙ.

In this inerting method, there is also a step of monitoring the pressure inside the casing (2) by pressure measuring means (not shown) which are in data communication with the control means (13). If the control means (13) determines that the pressure inside the casing (2) is over a pre-set pressure threshold based on the data (measured pressure) provided by the pressure measuring means, the first outlet valve (6) is opened above a pre-set flow rate threshold for exhausting pressure from the casing (2). At the same time the inlet valve (5) may be also opened above the pre-set flow rate threshold for supplying nitrogen to the fluid injection device (10) for injecting this fluid into the casing (2) until the pressure in the casing (2) achieves the same pressure as outside the aircraft (20). The pre-set pressure threshold and the pre-set flow rate threshold may vary depending on the configuration of the casing and the fuel cell system.

Moreover, if the control means (13) determines that the concentration of hydrogen and/or the concentration of oxygen inside the casing (2) is/are above a third pre-set thresholds, both inlet valve (5) and first outlet valve (6) are opened above a pre-set flow rate threshold. This is to rapidly sweep the fluid contained in the casing (2) until it reaches concentrations of hydrogen and oxygen below the second pre-set thresholds. In an example, the third pre-set threshold is 0,75% volumetric concentration of hydrogen and 2% volumetric concentration of oxygen.

Furthermore, the method comprises a step of extinguishing a fire inside the casing (2) if fire detection means of the inerting system detects that a fire is generated inside the casing (2). For example, for a fire to start there has to be an air supply leak inside the casing (2), an overpressure inside the casing (2) and also a small leakage of hydrogen. All this triggers the start of a fire locally consuming part of the oxygen located inside the casing (2). Although at the moment a fire starts the hydrogen fuel cells (1) are shut down, there is always residual hydrogen in the pipes of the fuel cells (1).

To extinguish the fire in the casing (2), both the inlet valve (5) and the first outlet valve (6) are opened at maximum flow rate to evacuate the affected fluid inside the casing (2) as soon as possible and generate a new inerted fluid. Specifically, firstly the first outlet valve (6) is opened for flushing the oxygen and/or hydrogen but the pressure in the casing (2) increases due to the fire. Then, the inlet valve (5) is completely opened to suffocate the fire with the objective to obtain a lower concentration of oxygen and hydrogen inside the casing (2). In an embodiment, when the inerting system is operated to extinguish a fire inside the casing (2) as already described above, the concentration of oxygen is diminished below a 4%. Thus, when the volumetric concentration of oxygen is under 4%, no fire can be stabilize inside the casing (2). In an embodiment, the flammability limits are 4% for the hydrogen concentration and 4% for the oxygen concentration according to required safety policy limits regarding fire extinguishing.

The mass flow of nitrogen can be increased as needed. This mass flow of nitrogen is related to the free volume of the casing and the time required to inert again the casing in case of failure or fire inside the casing.

## Claims

1. An inerting system adapted for inerting a fuel cell system for an aircraft (20), the fuel cell system comprising a set of fuel cells (1) stacked next to each other along a longitudinal direction X-X' and with a free space between consecutive fuel cells (1); the inerting system comprising:
- a casing (2) adapted to house the set of fuel cells (1) so that there is also a free space between each fuel cell (1) and the casing (2), the casing (2) comprising a bottom (2.3), a top (2.4) and a plurality of lateral walls (2.5, 2.6) extending between the bottom (2.3) and the top (2-.4) in the longitudinal direction X-X', the casing further comprising a first outlet (2.1) configured to connect the inside of the casing (2) with the outside of the aircraft (20);
- inert gas supplying means (4) configured to supply inert gas;
- a fluid injection device (10) in fluid communication with the inert gas supplying means (4) through an inlet channel (11) and configured to inject a fluid at least partially comprising inert gas into the casing (2); and
- fluid regulating means configured to regulate the flow of fluid at least partially comprising inert gas;
wherein
the first outlet (2.1) of the casing (2) is arranged over the stack of fuel cells (1) according to the longitudinal direction X-X'; and
the fluid injection device (10) comprises,
a main channel (7) connected to the inlet channel (11), and
at least two distribution channels (8.1, 8.2, 8.3) connected to the main channel (7) and distributed at different heights along the longitudinal direction X-X' ; and
each distribution channel (8.1, 8.2, 8.3) comprises a plurality of injectors (9) distributed along the distribution channel (8.1, 8.2, 8.3) and configured to inject fluid towards the free space between two fuel cells (1) or the free space between a fuel cell (1) and the casing (2).

2. The inerting system according to the previous claim, wherein the fluid injection device (10) is located outside the casing (2) so that the injectors (9) of each distribution channel (8.1, 8.2, 8.3) pass through the casing (2) for injecting fluid inside the casing (2).

3. The inerting system according to claim 1, wherein the fluid injection device (10) is located inside the casing (2) so that the inlet channel (11) passes through the casing (2) fluid injection device.

4. The inerting system according to any one of previous claims, wherein
• the fluid injection device (10) further comprises an additional distribution channel (8') connected to the main channel (7) and comprising a plurality of additional injectors (9') arranged along the additional distribution channel (8'), and
• the additional injectors (9') are configured to inject fluid inside the casing (2) according to the longitudinal direction X-X' from the bottom (2.3) of the casing (2) towards the top (2.4) of the casing (2).

5. The inerting system according to any one of previous claims, wherein
• the distribution channels (8, 8.1, 8.2, 8.3) are arranged on a same side of the stack of fuel cells (1), and
• the injectors (9) are configured to inject fluid according to a same first direction from one lateral wall (2.5) of the casing (2) to an opposite lateral wall (2.6) of the casing (2).

6. The inerting system according to any one of claims 1 to 4, wherein at least
• a first distribution channel (8.1, 8.2, 8.3) and the respective injectors (9) are arranged on a first side of the of the stack of fuel cells (1), so that the injectors (9) are configured to inject fluid in a first direction through a first free space, between two fuel cells (1) or between a fuel cell (1) and the casing (2), and
• a second distribution channel (8.1, 8.2, 8.3) and the respective injectors (9) are arranged on a second side, different from the first side of the stack of fuel cells (1), so that the injectors (9) are configured to inject fluid in a second direction, different from the first direction, through a second free space consecutive to the first free space.

7. The inerting system according to any one of the previous claims, wherein each injector (9) comprises an injecting channel (9.1) and a nozzle (9.2) oriented and opened to the inside of the casing (2), wherein the injecting channel (9.1) is connected to a distribution channel (8.1, 8.2, 8.3) and the nozzle (9.2).

8. **The** inerting system according to the previous claim, wherein each distribution channel (8.1, 8.2, 8.3) and its respective injectors (9) are comprised in an enclosing structure (14), the enclosing structure (14) comprising a common outlet (14.1) open to the casing (2) and a common space (14.2) upstream of the common outlet (14.1), and wherein the nozzle opening (9.2.1) of each injector (9) is opened to said common space (14.2).

9. **The** inerting system according to any one of the previous claims, further comprising:
- sensing means (12) configured to measure the concentration of oxygen and the concentration of hydrogen of the fluid located inside the casing (2); and
- control means (13) in data communication with the sensing means (12) and configured to independently control at least the fluid regulating means based on the concentration of oxygen and the concentration of hydrogen inside the casing (2).

10. **The** inerting system according to the previous claim, further comprising a fluid regulation system (S) configured to recirculate part of the fluid located inside the casing (2) to the inlet channel (11) for supplying the recirculated fluid mixed with the inert gas to the inside of the casing (2) through the fluid injection device (10); wherein the control means (13) is further configured to:
- independently control the fluid recirculation system (S) based on the concentration of oxygen and the concentration of hydrogen measured by the sensing means (12); and
- actuate the recirculation in the fluid recirculation system (S) when the concentration of oxygen and/or the concentration of hydrogen of the fluid located inside the casing (2) are below first pre-set thresholds respectively.

11. **The** inerting system according to any one of the previous claims, wherein the fluid regulating means comprises:
• an inlet valve (5) configured to regulate the supply of at least inert gas from the inert gas supplying means (4) towards the fluid injection device (10); and
• a first outlet valve (6) configured to regulate an outlet flow of fluid located inside the casing (2) through the first outlet (2.1).

12. Aircraft (20) comprising an inerting system according to any one of the previous claims.

13. Method for inerting a fuel cell system by an inerting system that comprises a fluid injection device (10), wherein:
the fuel cell system is housed in a casing (2) and comprises a set of fuel cells (1) stacked next to each other along a longitudinal direction X-X' and with free space between consecutive fuel cells (1) and between each fuel cell (1) and the casing (2); and
the fluid injection device (10) comprises a main channel (7) and a plurality of distribution channels (8.1, 8.2, 8.3) connected to the main channel (7) and distributed at different heights along the longitudinal direction X-X', each distribution channel (8.1, 8.2, 8.3) comprising a plurality of injectors (9) distributed along each distribution channel (8.1, 8.2, 8.3) and configured to inject fluid towards the free space between two fuel cells (1) or the free space between a fuel cell (1) and the casing (2);
wherein the method comprises:
(a) supplying inert gas to the fluid injection device (10) by an inert gas supplying means (4); and
(b) exhausting part of a fluid located inside the casing (2) through a first outlet (2.1);
wherein in step a) at least the inert gas supplied by the supplying means (4) is injected inside the casing (2) through the injectors (9), towards the free space between fuel cells (1) and/or the free space between a fuel cell (1) and the casing (2).

14. Method according to the previous claim, further comprising:
(c) monitoring the concentration of oxygen and the concentration of hydrogen inside the casing (2) by sensing means (12);
(d) recirculating part of the fluid located inside the casing (2) through a fluid recirculation system (S) of the inerting system if the concentration of hydrogen and/or the concentration of oxygen of the fluid to be recirculated are below second pre-set thresholds; and
injecting to the inside of the casing (2) the recirculated fluid mixed with pure inert gas through the fluid injection device (10).

## Patentansprüche

1. Inertisierungssystem, das zum Inertisieren eines Brennstoffzellensystems für ein Flugzeug (20) geeignet ist, wobei das Brennstoffzellensystems einen Satz von Brennstoffzellen (1) umfasst, die entlang einer Längsrichtung X-X' nebeneinander gestapelt sind und einen Freiraum zwischen aufeinanderfolgenden Brennstoffzellen (1) aufweisen; wobei das Inertisierungssystem Folgendes umfasst:
- ein Gehäuse (2), das dazu geeignet ist, den Satz von Brennstoffzellen (1) so aufzunehmen, dass auch ein Freiraum zwischen jeder Brennstoffzelle (1) und dem Gehäuse (2) vorhanden ist, wobei das Gehäuse (2) eine Unterseite (2.3), eine Oberseite (2.4) und mehrere laterale Wände (2.5, 2.6) umfasst, die sich zwischen der Unterseite (2.3) und der Oberseite (2-.4) in der Längsrichtung X-X' erstrecken, wobei das Gehäuse ferner einen ersten Auslass (2.1) umfasst, der dazu ausgelegt ist, das Innere des Gehäuses (2) mit der Außenseite des Flugzeugs (20) zu verbinden;
- ein Inertgaszufuhrmittel (4), das dazu ausgelegt ist, Inertgas zuzuführen;
- eine Fluideinspritzvorrichtung (10), die durch einen Einlasskanal (11) in Fluidverbindung mit dem Inertgaszufuhrmittel (4) steht und dazu ausgelegt ist, ein Fluid, das zumindest teilweise Inertgas umfasst, in das Gehäuse (2) einzuspritzen; und
- ein Fluidregelungsmittel, das dazu ausgelegt ist, die Strömung von Fluid, das zumindest teilweise Inertgas umfasst, zu regeln;
wobei
der erste Auslass (2.1) des Gehäuses (2) gemäß der Längsrichtung X-X' über dem Stapel von Brennstoffzellen (1) angeordnet ist; und
die Fluideinspritzvorrichtung (10) Folgendes umfasst,
einen Hauptkanal (7), der mit dem Einlasskanal (11) verbunden ist, und
mindestens zwei Verteilungskanäle (8.1, 8.2, 8.3), die mit dem Hauptkanal (7) verbunden und entlang der Längsrichtung X-X' in unterschiedlichen Höhen verteilt sind; und
jeder Verteilungskanal (8.1, 8.2, 8.3) mehrere Einspritzelemente (9) umfasst, die entlang des Verteilungskanals (8.1, 8.2, 8.3) verteilt und dazu ausgelegt sind, Fluid in Richtung des Freiraums zwischen zwei Brennstoffzellen (1) oder des Freiraums zwischen einer Brennstoffzelle (1) und dem Gehäuse (2) einzuspritzen.

2. Inertisierungssystem nach dem vorhergehenden Anspruch, wobei die Fluideinspritzvorrichtung (10) außerhalb des Gehäuses (2) so angeordnet ist, dass die Einspritzelemente (9) jedes Verteilungskanals (8.1, 8.2, 8.3) zum Einspritzen von Fluid innerhalb des Gehäuses (2) durch das Gehäuse (2) hindurchgehen.

3. Inertisierungssystem nach Anspruch 1, wobei die Fluideinspritzvorrichtung (10) innerhalb des Gehäuses (2) so angeordnet ist, dass der Einlasskanal (11) durch die Fluideinspritzvorrichtung des Gehäuses (2) hindurchgeht.

4. Inertisierungssystem nach einem der vorhergehenden Ansprüche, wobei
• die Fluideinspritzvorrichtung (10) ferner einen zusätzlichen Verteilungskanal (8') umfasst, der mit dem Hauptkanal (7) verbunden ist und mehrere zusätzliche Einspritzelemente (9') umfasst, die entlang des zusätzlichen Verteilungskanals (8') angeordnet sind, und
• die zusätzlichen Einspritzelemente (9') dazu ausgelegt sind, Fluid innerhalb des Gehäuses (2) gemäß der Längsrichtung X-X' von der Unterseite (2.3) des Gehäuses (2) in Richtung der Oberseite (2.4) des Gehäuses (2) einzuspritzen.

5. Inertisierungssystem nach einem der vorhergehenden Ansprüche, wobei
• die Verteilungskanäle (8, 8.1, 8.2, 8.3) auf einer gleichen Seite des Stapels von Brennstoffzellen (1) angeordnet sind, und
• die Einspritzelemente (9) dazu ausgelegt sind, Fluid gemäß einer gleichen ersten Richtung von einer lateralen Wand (2.5) des Gehäuses (2) zu einer gegenüberliegenden lateralen Wand (2.6) des Gehäuses (2) einzuspritzen.

6. Inertisierungssystem nach einem der Ansprüche 1 bis 4, wobei mindestens
• ein erster Verteilungskanal (8.1, 8.2, 8.3) und die jeweiligen Einspritzelemente (9) auf einer ersten Seite des Stapels von Brennstoffzellen (1) so angeordnet sind, dass die Einspritzelemente (9) dazu ausgelegt sind, Fluid in einer ersten Richtung durch einen ersten Freiraum zwischen zwei Brennstoffzellen (1) oder zwischen einer Brennstoffzelle (1) und dem Gehäuse (2) einzuspritzen, und
• ein zweiter Verteilungskanal (8.1, 8.2, 8.3) und die jeweiligen Einspritzelemente (9) auf einer von der ersten Seite unterschiedlichen zweiten Seite des Stapels von Brennstoffzellen (1) so angeordnet sind, dass die Einspritzelemente (9) dazu ausgelegt sind, Fluid in einer von der ersten Richtung unterschiedlichen zweiten Richtung durch einen auf den ersten Freiraum folgenden zweiten Freiraum einzuspritzen.

7. Inertisierungssystem nach einem der vorhergehenden Ansprüche, wobei jedes Einspritzelement (9) einen Einspritzkanal (9.1) und eine Düse (9.2) umfasst, die zum Inneren des Gehäuses (2) ausgerichtet und geöffnet ist, wobei der Einspritzkanal (9.1) mit einem Verteilungskanal (8.1, 8.2, 8.3) und der Düse (9.2) verbunden ist.

8. Inertisierungssystem nach dem vorhergehenden Anspruch, wobei jeder Verteilungskanal (8.1, 8.2, 8.3) und seine jeweiligen Einspritzelemente (9) in einer Umhüllungsstruktur (14) enthalten sind, wobei die Umhüllungsstruktur (14) einen gemeinsamen Auslass (14.1), der zum Gehäuse (2) offen ist, und einen gemeinsamen Raum (14.2) stromaufwärts des gemeinsamen Auslasses (14.1) umfasst, und wobei die Düsenöffnung (9.2.1) jedes Einspritzelements (9) zum gemeinsamen Raum (14.2) geöffnet ist.

9. Inertisierungssystem nach einem der vorhergehenden Ansprüche, ferner umfassend:
- ein Abfühlmittel (12), das dazu ausgelegt ist, die Sauerstoffkonzentration und die Wasserstoffkonzentration des Fluids zu messen, das sich innerhalb des Gehäuses (2) befindet; und
- ein Steuermittel (13), das in Datenkommunikation mit dem Abfühlmittel (12) steht und dazu ausgelegt ist, mindestens das Fluidregelungsmittel basierend auf der Sauerstoffkonzentration und der Wasserstoffkonzentration innerhalb des Gehäuses (2) unabhängig zu steuern.

10. Inertisierungssystem nach dem vorhergehenden Anspruch, ferner umfassend ein Fluidregelungssystem (S), das dazu ausgelegt ist, einen Teil des Fluids, das sich innerhalb des Gehäuses (2) befindet, zu dem Einlasskanal (11) zu rezirkulieren, um das mit dem Inertgas gemischte rezirkulierte Fluid durch die Fluideinspritzvorrichtung (10) zum Inneren des Gehäuses (2) zuzuführen; wobei das Steuermittel (13) ferner zu Folgendem ausgelegt ist:
- unabhängiges Steuern des Fluidrezirkulationssystems (S) basierend auf der Sauerstoffkonzentration und der Wasserstoffkonzentration, die durch das Abfühlmittel (12) gemessen werden; und
- Betätigen der Rezirkulation in dem Fluidrezirkulationssystem (S), wenn die Sauerstoffkonzentration und/oder die Wasserstoffkonzentration des Fluids, das sich innerhalb des Gehäuses (2) befindet, jeweils unter ersten vorgegebenen Schwellen liegt/liegen.

11. Inertisierungssystem nach einem der vorhergehenden Ansprüche, wobei das Fluidregelungsmittel Folgendes umfasst:
• ein Einlassventil (5), das dazu ausgelegt ist, die Zufuhr von zumindest Inertgas von dem Inertgaszufuhrmittel (4) in Richtung der Fluideinspritzvorrichtung (10) zu regeln; und
• ein erstes Auslassventil (6), das dazu ausgelegt ist, eine Auslassströmung von Fluid, das sich innerhalb des Gehäuses (2) befindet, durch den ersten Auslass (2.1) zu regeln.

12. Flugzeug (20), das ein Inertisierungssystem nach einem der vorhergehenden Ansprüche umfasst.

13. Verfahren zum Inertisieren eines Brennstoffzellensystems durch ein Inertisierungssystem, das eine Fluideinspritzvorrichtung (10) umfasst, wobei:
das Brennstoffzellensystem in einem Gehäuse (2) aufgenommen ist und einen Satz von Brennstoffzellen (1) umfasst, die entlang einer Längsrichtung X-X' nebeneinander gestapelt sind und einen Freiraum zwischen aufeinanderfolgenden Brennstoffzellen (1) und zwischen jeder Brennstoffzelle (1) und dem Gehäuse (2) aufweisen; und
die Fluideinspritzvorrichtung (10) einen Hauptkanal (7) und mehrere Verteilungskanäle (8.1, 8.2, 8.3) umfasst, die mit dem Hauptkanal (7) verbunden sind und in unterschiedlichen Höhen entlang der Längsrichtung X-X' verteilt sind, wobei jeder Verteilungskanal (8.1, 8.2, 8.3) mehrere Einspritzelemente (9) umfasst, die entlang jedem Verteilungskanal (8.1, 8.2, 8.3) verteilt und dazu ausgelegt sind, Fluid in Richtung des Freiraums zwischen zwei Brennstoffzellen (1) oder des Freiraums zwischen einer Brennstoffzelle (1) und dem Gehäuse (2) einzuspritzen;
wobei das Verfahren Folgendes umfasst:
(a) Zuführen von Inertgas zu der Fluideinspritzvorrichtung (10) durch ein Inertgaszufuhrmittel (4); und
b) Ablassen eines Teils eines innerhalb des Gehäuses (2) befindlichen Fluids durch einen ersten Auslass (2.1); wobei in Schritt a) zumindest das durch das Zufuhrmittel (4) zugeführte Inertgas innerhalb des Gehäuses (2) durch die Einspritzelemente (9) in Richtung des Freiraums zwischen Brennstoffzellen (1) und/oder des Freiraums zwischen einer Brennstoffzelle (1) und dem Gehäuse (2) eingespritzt wird.

14. Verfahren nach einem der vorhergehenden Ansprüche, ferner umfassend:
(c) Überwachen der Sauerstoffkonzentration und der Wasserstoffkonzentration innerhalb des Gehäuses (2) durch Abfühlmittel (12);
(d) Rezirkulieren eines Teils des innerhalb des Gehäuses (2) befindlichen Fluids durch ein Fluidrezirkulationssystem (S) des Inertisierungssystems, falls die Wasserstoffkonzentration und/oder die Sauerstoffkonzentration des zu rezirkulierenden Fluids unter zweiten vorgegebenen Schwellen liegt/liegen; und Einspritzen des mit reinem Inertgas gemischten rezirkulierten Fluids durch die Fluideinspritzvorrichtung (10) zum Inneren des Gehäuses (2).

## Revendications

1. Système d'inertage adapté pour inerter un système de pile à combustible pour un aéronef (20), le système de pile à combustible comprenant un ensemble de piles à combustible (1) empilées les unes à côté des autres le long d'une direction longitudinale X-X' et avec un espace libre entre des piles à combustible consécutives (1) ; le système d'inertage comprenant :
- un boîtier (2) adapté pour loger l'ensemble de piles à combustible (1) de telle sorte qu'il y a également un espace libre entre chaque pile à combustible (1) et le boîtier (2), le boîtier (2) comprenant un bas (2.3), un haut (2.4) et une pluralité de parois latérales (2.5, 2.6) s'étendant entre le bas (2.3) et le haut (2.4) dans la direction longitudinale X-X', le boîtier comprenant en outre une première sortie (2.1) configurée pour raccorder l'intérieur du boîtier (2) à l'extérieur de l'aéronef (20) ;
- des moyens d'alimentation en gaz inerte (4) configurés pour effectuer l'alimentation en un gaz inerte ;
- un dispositif d'injection de fluide (10) en communication fluidique avec les moyens d'alimentation en gaz inerte (4) par le biais d'un canal d'entrée (11) et configuré pour injecter un fluide, comprenant au moins partiellement du gaz inerte, dans le boîtier (2) ; et
- des moyens de régulation de fluide configurés pour réguler le débit du fluide comprenant au moins partiellement du gaz inerte ;
dans lequel
la première sortie (2.1) du boîtier (2) est agencée pardessus l'empilement de piles à combustible (1) selon la direction longitudinale X-X' ; et
le dispositif d'injection de fluide (10) comprend
un canal principal (7) raccordé au canal d'entrée (11), et au moins deux canaux de distribution (8.1, 8.2, 8.3) raccordés au canal principal (7) et distribués à des hauteurs différentes le long de la direction longitudinale X-X' ; et chaque canal de distribution (8.1, 8.2, 8.3) comprend une pluralité d'injecteurs (9) distribués le long du canal de distribution (8.1, 8.2, 8.3) et configurés pour injecter un fluide vers l'espace libre entre deux piles à combustible (1) ou l'espace libre entre une pile à combustible (1) et le boîtier (2).

2. Système d'inertage selon la revendication précédente, dans lequel le dispositif d'injection de fluide (10) est situé à l'extérieur du boîtier (2) de telle sorte que les injecteurs (9) de chaque canal de distribution (8.1, 8.2, 8.3) passent à travers le boîtier (2) pour injecter un fluide à l'intérieur du boîtier (2).

3. Système d'inertage selon la revendication 1, dans lequel le dispositif d'injection de fluide (10) est situé à l'intérieur du boîtier (2) de telle sorte que le canal d'entrée (11) passe à travers le dispositif d'injection de fluide du boîtier (2).

4. Système d'inertage selon l'une quelconque des revendications précédentes, dans lequel
• le dispositif d'injection de fluide (10) comprend en outre un canal de distribution supplémentaire (8') raccordé au canal principal (7) et comprenant une pluralité d'injecteurs supplémentaires (9') agencés le long du canal de distribution supplémentaire (8'), et
• les injecteurs supplémentaires (9') sont configurés pour injecter un fluide à l'intérieur du boîtier (2) selon la direction longitudinale X-X' depuis le bas (2.3) du boîtier (2) vers le haut (2.4) du boîtier (2).

5. Système d'inertage selon l'une quelconque des revendications précédentes, dans lequel
• les canaux de distribution (8, 8.1, 8.2, 8.3) sont agencés sur un même côté de l'empilement de piles à combustible (1), e
• les injecteurs (9) sont configurés pour injecter un fluide selon une même première direction depuis une paroi latérale (2.5) du boîtier (2) jusqu'à une paroi latérale opposée (2.6) du boîtier (2).

6. Système d'inertage selon l'une quelconque des revendications 1 à 4, dans lequel au moins
• un premier canal de distribution (8.1, 8.2, 8.3) et les injecteurs respectifs (9) sont agencés sur un premier côté de l'empilement de piles à combustible (1), de telle sorte que les injecteurs (9) sont configurés pour injecter un fluide dans une première direction à travers un premier espace libre, entre deux piles à combustible (1) ou entre une pile à combustible (1) et le boîtier (2), et
• un second canal de distribution (8.1, 8.2, 8.3) et les injecteurs respectifs (9) sont agencés sur un second côté, différent du premier côté de l'empilement de piles à combustible (1), de telle sorte que les injecteurs (9) sont configurés pour injecter un fluide dans une seconde direction, différente de la première direction, à travers un second espace libre consécutif au premier espace libre.

7. Système d'inertage selon l'une quelconque des revendications précédentes, dans lequel chaque injecteur (9) comprend un canal d'injection (9.1) et une buse (9.2) orientée et ouverte sur l'intérieur du boîtier (2), dans lequel le canal d'injection (9.1) est raccordé à un canal de distribution (8.1, 8.2, 8.3) et à la buse (9.2).

8. Système d'inertage selon la revendication précédente, dans lequel chaque canal de distribution (8.1, 8.2, 8.3) et ses injecteurs respectifs (9) sont compris dans une structure d'enceinte (14), la structure d'enceinte (14) comprenant une sortie commune (14.1) ouverte sur le boîtier (2) et un espace commun (14.2) en amont de la sortie commune (14.1), et dans lequel l'ouverture de buse (9.2.1) de chaque injecteur (9) est ouverte sur ledit espace commun (14.2).

9. Système d'inertage selon l'une quelconque des revendications précédentes, comprenant en outre :
- des moyens de détection (12) configurés pour mesurer la concentration en oxygène et la concentration en hydrogène du fluide situé à l'intérieur du boîtier (2) ; et
- des moyens de commande (13) en communication de données avec les moyens de détection (12) et configurés pour commander indépendamment au moins les moyens de régulation de fluide sur la base de la concentration en oxygène et de la concentration en hydrogène à l'intérieur du boîtier (2).

10. Système d'inertage selon la revendication précédente, comprenant en outre un système de régulation de fluide (S) configuré pour effectuer la recirculation d'une partie du fluide situé à l'intérieur du boîtier (2) jusqu'au canal d'entrée (11) pour effectuer l'alimentation en le fluide, dont la recirculation a été effectuée, mélangé avec le gaz inerte, à l'intérieur du boîtier (2) par le biais du dispositif d'injection de fluide (10) ; dans lequel les moyens de commande (13) sont en outre configurés pour :
- commander indépendamment le système de recirculation de fluide (S) sur la base de la concentration en oxygène et de la concentration en hydrogène mesurées par les moyens de détection (12) ; et
- actionner la recirculation dans le système de recirculation de fluide (S) lorsque la concentration en oxygène et/ou la concentration en hydrogène du fluide situé à l'intérieur du boîtier (2) sont en dessous de premiers seuils prédéfinis respectivement.

11. Système d'inertage selon l'une quelconque des revendications précédentes, dans lequel les moyens de régulation de fluide comprennent :
• une soupape d'entrée (5) configurée pour réguler l'alimentation en au moins du gaz inerte depuis les moyens d'alimentation en gaz inerte (4) vers le dispositif d'injection de fluide (10) ; et
• une première soupape de sortie (6) configurée pour réguler un écoulement de sortie d'un fluide situé à l'intérieur du boîtier (2) à travers la première sortie (2.1).

12. Aéronef (20), comprenant un système d'inertage selon l'une quelconque des revendications précédentes.

13. Procédé pour inerter un système de pile à combustible par l'intermédiaire d'un système d'inertage qui comprend un dispositif d'injection de fluide (10), dans lequel :
le système de pile à combustible est logé dans un boîtier (2) et comprend un ensemble de piles à combustible (1) empilées les unes à côté des autres le long d'une direction longitudinale X-X' et avec espace libre entre des piles à combustible consécutives (1) et entre chaque pile à combustible (1) et le boîtier (2) ; et
le dispositif d'injection de fluide (10) comprend un canal principal (7) et une pluralité de canaux de distribution (8.1, 8.2, 8.3) raccordés au canal principal (7) et distribués à des hauteurs différentes le long de la direction longitudinale X-X', chaque canal de distribution (8.1, 8.2, 8.3) comprenant une pluralité d'injecteurs (9) distribués le long de chaque canal de distribution (8.1, 8.2, 8.3) et configurés pour injecter un fluide vers l'espace libre entre deux piles à combustible (1) ou l'espace libre entre une pile à combustible (1) et le boîtier (2) ;
dans lequel le procédé comprend :
(a) l'alimentation en du gaz inerte au dispositif d'injection de fluide (10) par l'intermédiaire de moyens d'alimentation en gaz inerte (4) ; et
(b) l'évacuation d'une partie d'un fluide situé à l'intérieur du boîtier (2) à travers une première sortie (2.1) ; dans lequel, dans l'étape a), au moins le gaz inerte en lequel est effectuée l'alimentation par les moyens d'alimentation (4) est injecté à l'intérieur du boîtier (2) à travers les injecteurs (9), vers l'espace libre entre des piles à combustible (1) et/ou l'espace libre entre une pile à combustible (1) et le boîtier (2).

14. Procédé selon la revendication précédente, comprenant en outre :
(c) la surveillance de la concentration en oxygène et de la concentration en hydrogène à l'intérieur du boîtier (2) par l'intermédiaire de moyens de détection (12) ;
(d) la recirculation d'une partie du fluide situé à l'intérieur du boîtier (2) par l'intermédiaire d'un système de recirculation de fluide (S) du système d'inertage si la concentration en hydrogène et/ou la concentration en oxygène du fluide, dont la recirculation doit être effectuée, sont en dessous de seconds seuils prédéfinis ; et
l'injection à l'intérieur du boîtier (2) d'un fluide, dont la recirculation a été effectuée, mélangé avec du gaz inerte pur à travers le dispositif d'injection de fluide (10).
